# EUROPÄISCHE PATENTANMELDUNG

(11) **EP 1 632 374 A1**
(43) Veröffentlichungstag der Anmeldung: **08.03.2006**
(21) Anmeldenummer: 05016541.4
(22) Anmeldetag: 29.07.2005
(51) Int. Cl.: B60H 1/32

(54) **Kraftfahrzeug-Standklimaanlage**

(30) Priorität: 01.09.2004 DE 102004042678
(71) Anmelder: Behr GmbH & Co. KG, 70469 Stuttgart (DE)
(72) Erfinder: Heberle, Arthur, Dr.-Ing., 68163 Mannheim (DE); Weinbrenner, Marcus, 70499 Stuttgart (DE)
(74) Vertreter: Mantel, Berthold Friedrich

(57) **Zusammenfassung**

Die Erfindung betrifft eine Kraftfahrzeug-Standklimaanlage mit einem Kältemittel-Kreislauf (4), in welchem mindestens ein Kompressor (5) angeordnet ist, welcher das Kältemittel im Kältemittel-Kreislauf (4) umwälzt, wobei der Kältemittel-Kreislauf (4) in zwei Kältemittel-Kreisläufe (4a, 4b) auftrennbar ist, sowie ein Verfahren zu dessen Regelung.

## Beschreibung

Die Erfindung betrifft eine Kraftfahrzeug-Standklimaanlage gemäß dem Oberbegriff des Anspruches 1 und ein Verfahren zum Betrieb einer solchen gemäß dem Oberbegriff des Anspruches 7.

Aus der DE 44 14 547 A1 ist eine Kraftfahrzeug-Standklimaanlage mit einem ersten, fahrzeugmotorisch angetriebenen Kompressor und einem zweiten, parallel hierzu geschalteten, elektrisch mit Hilfe von Kraftfahrzeug-Zusatzbatterien gespeisten Gleichstrom-Elektromotors antreibbaren Kompressor bekannt. Im Normalbetrieb, das heißt bei laufendem Motor, wird das Kältemittel im Kältemittel-Kreislauf ausschließlich mit Hilfe des ersten Kompressors, im Standbetrieb, das heißt bei stehendem Motor, ausschließlich mit Hilfe des zweiten Kompressors umgewälzt. Hierbei erfolgt jeweils die Kühlung des Kältemittels in einem Kondensator, welcher nach der Zusammenführung der beiden Zweige angeordnet ist.

Ferner sind eine Velzahl von Standklimaanlagen mit einem Kältespeicher bekannt, jedoch benötigen diese eine gewisse Aufladezeit.

Derartige Kraftfahrzeug-Standklimaanlagen lassen somit noch Wünsche offen.

Es ist Aufgabe der Erfindung, eine Kraftfährzeug-Standklimaanlage der eingangs genannten Art zu verbessern.

Diese Aufgabe wird gelöst durch eine Kraftfährzeug-Standklimaanlage mit den Merkmalen des Anspruchs 1 und durch ein Verfahren mit den Merkmalen des Anspruches 7. Vorteilhafte Ausgestaltungen sind Gegenstand der Unteransprüche.

Erfindungsgemäß ist ein Kraftfahrzeug-Standklimaanlage mit einem Kältemittel-Kreislauf vorgesehen, in welchem mindestens ein Kompressor angeordnet ist, welcher das Kältemittel im Kältemittel-Kreislauf umwälzt, wobei der Kältemittel-Kreislauf in zwei Kältemittel-Kreisläufe schaltbar auftrennbar ist. Die Auftrennbarkeit in zwei Teil-Kreisläufe ermöglicht eine Optimierung der Dimensionierung der Kompressoren für bestimmte Betriebszustände.

Im Falle einer Auftrennung in zwei Teil-Kreisläufe ist bevorzugt in einem Kältemittel-Kreislauf ein Front-Klimagerät und in dem anderen Kältemittel-Kreislauf ein Heck- oder Fond-Klimagerät angeordnet, die unabhängig voneinander regelbar sind.

Bevorzugt ist in jedem Kältemittel-Kreislauf ein Kompressor angeordnet. Hierbei ist einer der Kompressoren der Kompressor, der das Kältemittel im Gesamt-Kreislauf umwälzt. Im anderen Teil-Kreislauf ist ein zweiter Kompressor angeordnet, welcher bei einem Gesamt-Kreislauf bevorzugt steht, weshalb er bevorzugt in einem im Gesamt-Kreislauf nicht von Kältemittel durchströmten Zweig angeordnet ist. Bei dem Kompressor handelt es sich bevorzugt um einen elektrisch antreibbaren Kompressor, der bevorzugt nur im Standbetrieb angetrieben wird.

Vorzugsweise in einem dem Front-Klimagerät zugeordneten Kältemittel-Kreislauf ein mechanisch mit Hilfe des Kraftfahrzeug-Motors antreibbarer Kompressor angeordnet, wobei es sich bevorzugt um einen Hybrid-Kompressor handelt, der sowohl vom Kraftfahrzeug-Motor als auch elektrisch antreibbar ist.

Die Trennung der beiden Kältemittel-Kreisläufe erfolgt vorzugsweise bei einem Umschalten von Normalbetrieb auf Standbetrieb. Die Verbindung der beiden Kältemittel-Kreisläufe zu einem Gesamt-Kreislauf erfolgt bevorzugt bei der Rückkehr von Standbetrieb in Normalbetrieb. Eine Auftrennung ist sinnvoll, da im Standbetrieb eine deutlich geringere Kühlleistung als im Normalbetrieb erforderlich ist, weshalb der bzw. die entsprechenden Kompressoren kleiner dimensioniert werden können. Dies gilt auch für einen Hybrid-Kompressor, dessen mechanische Antriebsleistung somit vorzugsweise größer als seine elektrische Antriebsleistung ist.

Im Folgenden wird die Erfindung anhand mehrerer Ausführungsbeispiele, teilweise mit Varianten, unter Bezugnahme auf die Zeichnung im Detail erläutert. In der Zeichnung zeigen:
- Fig. 1: eine vereinfachte Darstellung eines Kältemittel-Kreislaufs gemäß dem ersten Ausführungsbeispiel,
- Fig. 2: eine vereinfachte Darstellung eines Kältemittel-Kreislaufs gemäß dem zweiten Ausführungsbeispiel,
- Fig. 3: eine vereinfachte Darstellung eines Kältemittel-Kreislaufs gemäß dem dritten Ausführungsbeispiel,
- Fig. 4: eine vereinfachte Darstellung eines Kältemittel-Kreislaufs gemäß dem vierten Ausführungsbeispiel, und
- Fig. 5: eine vereinfachte Darstellung eines Kältemittel-Kreislaufs gemäß dem fünften Ausführungsbeispiel.

Eine Kraftfahrzeug-Klimaanlage 1 mit einem Front-Klimagerät 2 und einem Heck- oder Fond-Klimagerät 3 weist einen Kältemittel-Kreislauf 4, welcher im Normalbetrieb von einem mit Hilfe des Kraftfahrzeug-Motors angetriebenen riemengetriebenen ersten Kompressor 5 umgewälzt wird. Die Stromversorgung ist in allen Figuren durch Strich-Punkt-Linien angedeutet. Auf den Standbetrieb wird an späterer Stelle näher eingegangen.

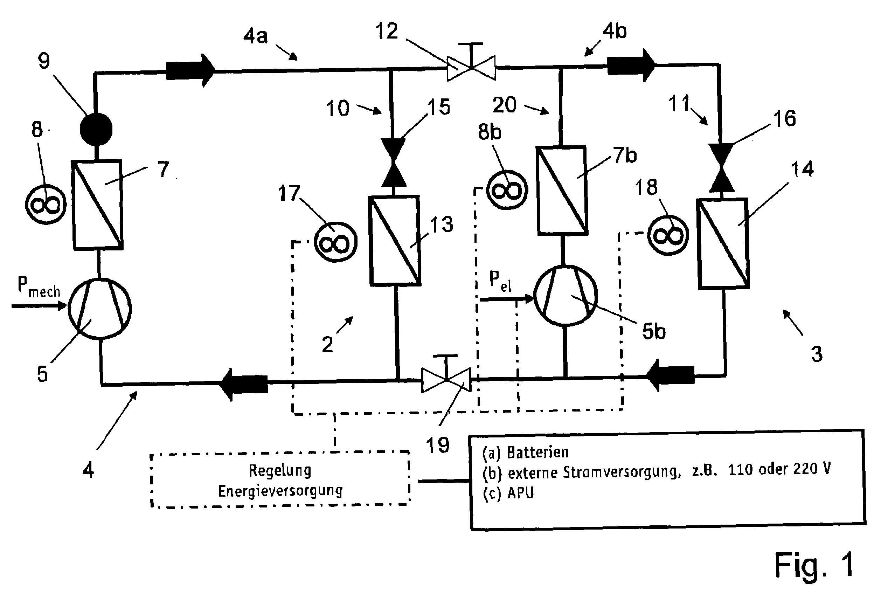

Im Folgenden wird der normale Betrieb, das heißt der Betrieb bei laufendem Motor, beschrieben. Der Strömungsverlauf des Kältemittels ist in Fig. 1 durch Pfeile dargestellt. Das von dem mechanisch mit Hilfe des laufenden Kraftfahrzeug-Motors angetriebenen Kompressor 5 kommende, in Folge der Kompression heiße Kältemittel durchströmt zum Abkühlen einen Kondensator 7, welcher von Luft gekühlt wird. Dabei wird die Luft von einem mit Hilfe des Kraftfahrzeug-Motors angetriebenen Lüfter 8, im Folgenden auch als erster Lüfter 8 bezeichnet, durch den Kondensator 7 gefördert. Nach dem Kondensator 7 ist ein erster Sammler 9 zum Sammeln und Zwischenspeichem von überschüssigem flüssigem Kältemittel angeordnet. Im Kältemittel-Kreislauf 4 erfolgt anschließend eine Verteilung des Kältemittels auf zwei dem jeweiligen Klimageräte 2 bzw. 3 zugeordnete Zweige 10 und 11, wobei ein Ventil 12 den Kältemitteldurchfluss absperren kann. Das Kältemittel strömt, bevor es zum jeweiligen Verdampfer 13 bzw. 14 gelangt, durch ein Expansionsorgan 15 bzw. 16, im dem es expandiert und dadurch abgekühlt wird. Jedem der Verdampfer 13 und 14 ist ein elektrisch angetriebenes Gebläse 17 bzw. 18 zugeordnet, das die Luft durch den Verdampfer 13 bzw. 14 und zum Kraftfahrzeug-Innenraum in der jeweiligen Klimazone fördert. Nach dem Durchströmen der Verdampfer 13 und 14 werden die Kältemittelströme wieder vereinigt und gelangen im normalen Betrieb wieder zum Kompressor 5.

Im Standbetrieb erfolgt mit Hilfe des Ventils 12 und eines zweiten Ventils 19 eine Auftrennung des Kältemittel-Kreislaufs 4 in zwei Kältemittel-Kreisläufe 4a und 4b. Da im ersten, der Front-Klimagerät 2 zugeordneten Kältemittel-Kreislauf 4a der vom Kraftfahrzeug-Motor antreibbare Kompressor 5 steht, erfolgt gemäß dem vorliegenden Ausführungsbeispiel im Standbetrieb keine Umwälzung des Kältemittels.

In dem Heck- oder Fond-Klimagerät 3 zugeordneten zweiten Kältemittel-Kreislauf 4b ist in einem Zweig 20 - der in Strömungsrichtung bei Normalbetrieb gesehen nach dem ersten Ventil 12 abzweigt und vor dem zweiten Ventil 19 einmündet - ein elektrisch antreibbarer Kompressor 5b mit nachfolgend angeordnetem Kondensator 7b angeordnet. Dieser zweite Kompressor 5b kann über Batterien oder eine externe (Wechsel-)Stromversorgung oder eine Hilfsenergieversorgung (APU = Auxiliary Power Unit) angetrieben werden, und wird gemäß dem vorliegenden Ausführungsbeispiel ausschließlich im Standbetrieb mit Strom versorgt, so dass er das Kältemittel im zweiten Kältemittel-Kreislauf 4b umwälzt. Durch den Kondensator 7b strömt im Standbetrieb Luft, die von einem elektrisch antreibbaren Lüfter 8b gefördert wird, um das heiße Kältemittel abzukühlen. Im Normalbetrieb, das heißt, wenn der Zweig 20 nicht von Kältemittel durchströmt wird, steht hingegen der Kompressor 5b und der Lüfter 8b. Um ein Rückströmen von Kältemittel über den Zweig 20 im Normalbetrieb zu verhindern, ist im Zweig 20 ein Rückschlagventil (nicht dargestellt) vorgesehen. Das Kältemittel gelangt anschließend in den Zweig 11, wo es im Expansionsorgan 16 entspannt wird und anschließend zum Verdampfer 14 gelangt. Der Verdampfer 14 wird von Luft durchströmt, die durch das Gebläse 18 gefördert wird.

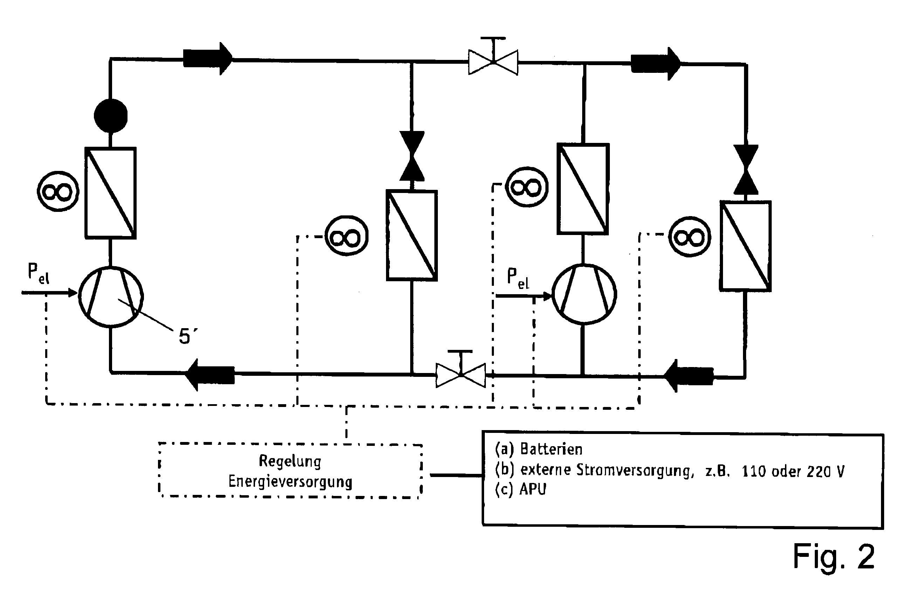

Um auch im Standbetrieb, das heißt bei stehendem Motor und somit stehendem mechanisch antreibbaren Kompressor 5, eine Kältemittelumwälzung zu ermöglichen, ist gemäß dem zweiten Ausführungsbeispiel ein zweiter, elektrisch antreibbarer Kompressor 5' vorgesehen, welcher den mechanisch antreibbaren Kompressor 5 ersetzt (vgl. Fig. 2).

Gemäß der nicht in der Zeichnung dargestellten Variante können die beiden Kompressoren auch in parallelen Zweigen des Kältemittel-Kreislaufs angeordnet sein, so dass der mechanisch antreibbare Kompressor auf den Gesamt-Kältemittel-Kreislauf und der elektrisch antreibbare Kompressor auf den Teil-Kältemittel-Kreislauf ausgelegt werden kann. Um ein Rückströmen bei stehendem elektrisch antreibbaren Kompressor zu verhindern, ist im entsprechenden Zweig des Kältemittel-Kreislaufs in Kältemittel-Strömungsrichtung nach dem elektrisch antreibbaren Kompressor ein Rückschlagventil angeordnet. Ein entsprechendes Rückschlagventil kann auch im anderen Zweig nach dem mechanisch antreibbaren Kompressor vorgesehen sein.

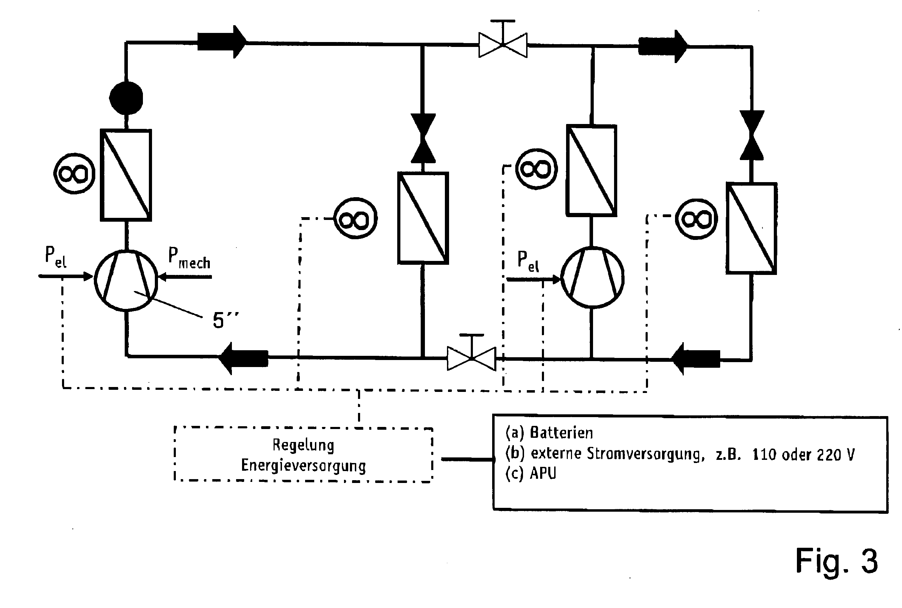

Gemäß dem dritten, in Fig. 3 dargestellten Ausführungsbeispiel ist ein Hybrid-Kompressor 5" vorgesehen, der im Normalbetrieb mechanisch vom Kraftfahrzeug-Motor und im Standbetrieb elektrisch angetrieben wird.

Andere Regelungen in Hinblick auf den Normal- und Standbetrieb, wie beispielsweise zwei mit Hilfe von zwei Kompressoren umgewälzte Kältemittel-Kreisläufe mit einem teilweisen Austausch von Kältemittel in bestimmten Betriebszuständen, sind ebenfalls möglich. Ebenfalls wäre eine ausschließliche Umwälzung des Kältemittel im Standbetrieb durch den elektrisch antreibbaren Kompressor 5b möglich, wobei ein Teil des Kältemittels durch das Ventil 12 zum Zweig 10 und durch das Ventil 19 wieder zum elektrisch antreibbaren Kompressor 5b strömt.

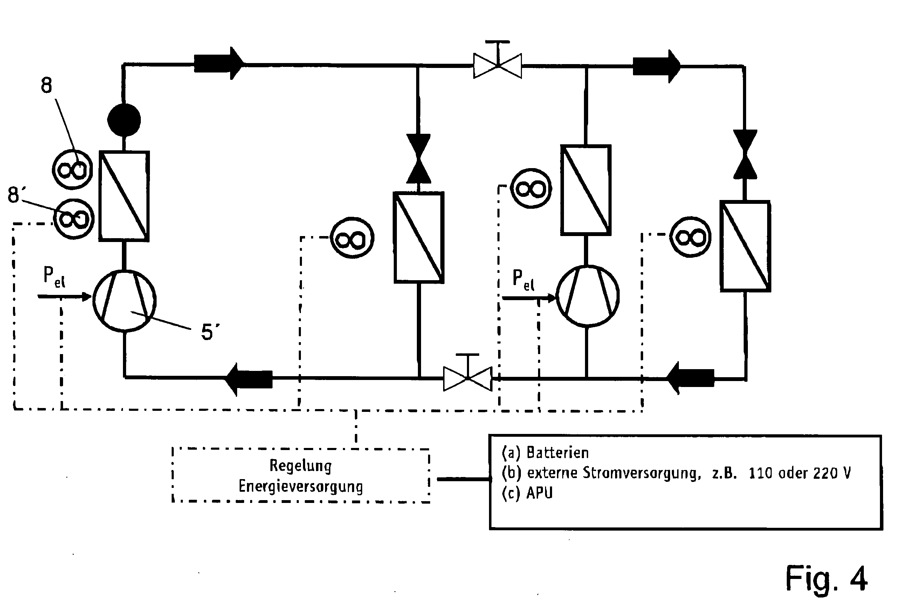

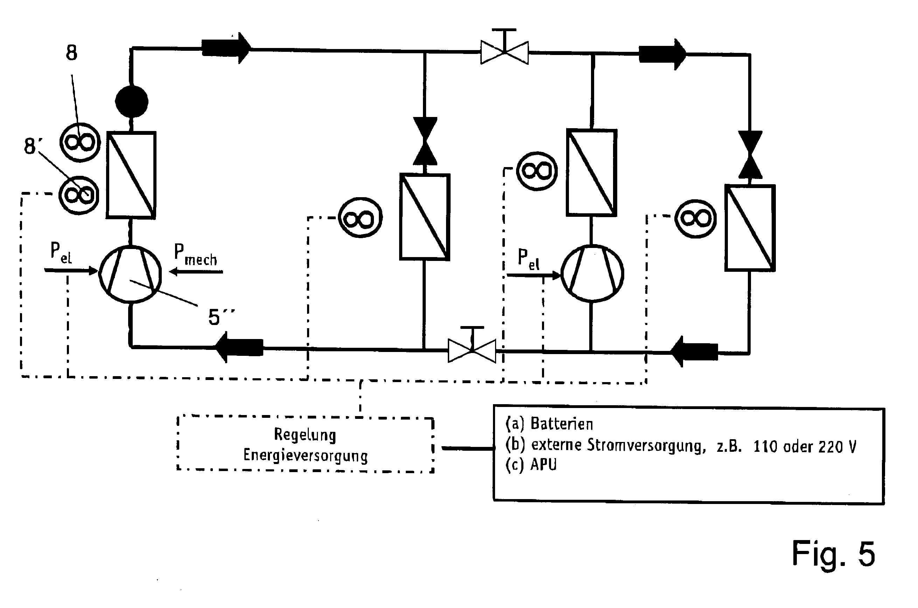

Gemäß einer in Fig. 4 dargestellten Variante zum zweiten Ausführungsbeispiel und einer in Fig. 5 dargestellten Variante zum dritten Ausführungsbeispiel ist neben dem einen, mechanisch mit Hilfe des Kraftfahrzeug-Motors antreibbaren Lüfter 8 am Kondensator 7 ein zweiter, elektrisch antreibbarer Lüfter 8' vorgesehen, welcher bei einem Stillstand des Fahrzeug-Motors eine ausreichende Kühlung sicherstellt.

Da bei parallel geschalteten Verdampfern und unterschiedlichen Kompressoren sich das Kältemittel im Standbetrieb bevorzugt in bestimmten Bauteilen, insbesondere in einem parallel geschalteten und sich nicht in Betrieb befindlichen Kompressor, im Überschuss ansammelt, was zu einem Abfall der Kälteleistung und unter Umständen auch zu einem Ausfall der Kompressoren führen kann, da im Standbetrieb genau so viel Kältemittel vorhanden ist, wie im Normalbetrieb, jedoch auf Grund der geringeren erforderlichen Kälteleistung eigentlich viel weniger Kältemittel benötigt wird, sind sinnvollerweise entsprechende Maßnahmen zur Verringerung der Kältemittelmenge im Standbetrieb zu treffen. Dies erfolgt gemäß dem vorliegenden elften Ausführungsbeispiel dadurch, dass im Standbetrieb eine definierte Menge an Kältemittel aus dem Kältemittel-Kreislauf über einen Bypass (nicht dargestellt) abgesaugt und zwischengelagert wird. Sobald in den Normalbetrieb umgeschaltet wird, wird das Kältemittel wieder in den Kältemittel-Kreislauf gepumpt.

Gemäß einer alternativen Variante wird der elektrische Kompressor nicht kontinuierlich, sondern nur intervallweise betrieben. Entsprechend einer weiteren Variante ist im Kältemittel-Kreislauf ein Kältemittel-Sammler mit variabler Füllmenge vorgesehen. Dabei ist auch eine Integration von Expansionsorgan in einem Sammler und Trocknereinheit möglich, so dass anstelle der beiden Expansionsorgane des ersten Ausführungsbeispiels entsprechende Kombinationen vorgesehen werden.

Weiter alternativ ist im Kältemittel-Kreislauf ein Bypass mit einem Eisspeicher vorgesehen, in den das überschüssige (kalte) Kältemittel eingeleitet wird, die Sole abkühlt, und während des Standbetrieb in diesem Bypass verweilt.

Als weitere Variante kann zumindest ein Teil des Kondensators, der im Standbetrieb nicht von kühlender Luft durchströmt wird, als Zwischenlager für das überschüssige Kältemittel dienen.

Gemäß einer nicht in der Zeichnung dargestellten Variante können zwei in Reihe geschaltete Kondensatoren, gegebenenfalls mit nachfolgenden Sammlern, angeordnet sein, wobei jedem Kondensator ein Lüfter zugeordnet, ein Lüfter mechanisch und der andere Lüfter elektrisch antreibbar ist. Für den Standbetrieb kann zudem ein Bypass um den Kondensator mit dem mechanisch antreibbaren Lüfter und/oder für den Normalbetrieb ein Bypass um den Kondensator mit dem elektrisch antreibbaren Lüfter vorgesehen sein. Die Regelung erfolgt mit Hilfe von Ventilen. Ein Bypass macht jedoch nur dann Sinn, wenn in einem Betriebszustand der dem mit Hilfe des Bypasses umgangenen Kondensator zugeordnete Lüfter nicht angetrieben wird.

Um die Luftströmung strömungstechnisch zu optimieren, kann an Stelle von zwei unterschiedlich antreibbaren Lüftern an einem Kondensator ein Hybridantrieb für einen Lüfter vorgesehen sein, welcher die beiden Lüfter ersetzt.

Bevorzugt ist eine erfindungsgemäße Kraftfahrzeug-Klimaanlage nach einem der beschriebenen Beispiele in einem Lastkraftwagen oder Truck mit einem von der Fahrerkabine bzw. dem Führerhaus abgetrennten Bereich, wie zum Beispiel einer Schlafkabine einsetzbar, wobei sich ein Front-Klimagerät in der Fahrerkabine befindet und ein Heck- oder Fond-Klimagerät im abgetrennten Bereich des Fahrzeugs.

### Bezugszeichenliste

- 1: Kraftfahrzeug-Klimaanlage
- 2: Front-Klimagerät
- 3: Heck- oder Fond-Klimagerät
- 4, 4a, 4b: Kältemittel-Kreislauf
- 5, 5b, 5', 5": Kompressor
- 7, 7b: Kondensator
- 8, 8b, 8': Lüfter
- 9: Sammler
- 10: erster Zweig
- 11: zweiter Zweig
- 12: Ventil
- 13: Verdampfer
- 14: Verdampfer
- 15: Expansionsorgan
- 16: Expansionsorgan
- 17: Gebläse
- 18: Gebläse
- 19: Ventil
- 20: Zweig

## Patentansprüche

1. Kraftfahrzeug-Standklimaanlage mit einem Kältemittel-Kreislauf (4), in welchem mindestens ein Kompressor (5) angeordnet ist, welcher das Kältemittel im Kältemittel-Kreislauf (4) umwälzt, **dadurch gekennzeichnet, dass** der Kältemittel-Kreislauf (4) in zwei Kältemittel-Kreisläufe (4a, 4b) schaltbar auftrennbar ist.

2. KraftFahrzeug-Standklimaanlage nach Anspruch 1, **dadurch gekennzeichnet, dass** in einem Kältemittel-Kreislauf (4a) ein Front-Klimagerät (2) und in dem anderen Kältemittel-Kreislauf (4b) ein Heck- oder Fond-Klimagerät (3) angeordnet ist.

3. Kraftfahrzeug-Standklimaanlage nach Anspruch 1 oder 2, **dadurch gekennzeichnet, dass** in jedem Kältemittel-Kreislauf (4a, 4b) ein Kompressor (5, 5b) angeordnet ist.

4. Kraftfahrzeug-Standklimaanlage nach einem der vorhergehenden Ansprüche, **dadurch gekennzeichnet, dass** in einem dem Front-Klimagerät (2) zugeordneten Kältemittel-Kreislauf (4a) ein mechanisch mit Hilfe des Kraftfahrzeug-Motors antreibbarer Kompressor (5, 5") angeordnet ist.

5. Kraftfahrzeug-Standklimaanlage nach Anspruch 4, **dadurch gekennzeichnet, dass** der Kompressor ein Hybrid-Kompressor (5") ist.

6. Kraftfahrzeug-Standklimaanlage nach einem der vorhergehenden Ansprüche, dass in einem dem Heck- oder Fond-Klimagerät (3) zugeordneten Kältemittel-Kreislauf (4b) ein elektrisch antreibbarer Kompressor (5b) angeordnet ist

7. Verfahren zum Betrieb einer Kraftfährzeug-Standklimaanlage mit einem Kältemittel-Kreislauf (4), in welchem mindestens ein Kompressor (5) angeordnet ist, welcher das Kältemittel im Kältemittel-Kreislauf (4) umwälzt, wobei im Kältemittel-Kreislauf (4) ein luftgekühlter Kondensator (7) zur Kühlung des vom Kompressor (5) kommenden Kältemittels angeordnet ist, **dadurch gekennzeichnet, dass** im Normalbetrieb der Kältemittel-Kreislauf (4) vorgesehen ist, und bei Umschalten in den Standbetrieb der Kältemittel-Kreislauf (4) in mindestens zwei Kältemittel-Kreisläufe (4a, 4b) aufgetrennt wird.

8. Verfahren nach Anspruch 7, **dadurch gekennzeichnet, dass** die beiden Kältemittel-Kreisläufe (4a, 4b) bei Umschalten von Standbetrieb auf Normalbetrieb wieder miteinander verbunden werden.

9. Verfahren nach Anspruch 7 oder 8, **dadurch gekennzeichnet, dass** im Standbetrieb in mindestens einem der Kältemittel-Kreisläufe (4a, 4b) das Kältemittel umgewälzt wird.

10. Verfahren nach einem der Ansprüche 7 bis 9, **dadurch gekennzeichnet, dass** im Standbetrieb in genau einem der Kältemittel-Kreisläufe (4b) das Kältemittel umgewälzt wird, während im anderen Kältemittel-Kreislauf (4a) kein Umwälzen erfolgt.
